# FASCICULE DE BREVET EUROPEEN

(11) **EP 0 536 005 B1**
(45) Date de publication et mention de la délivrance du brevet: **27.09.1995**
(21) Numéro de dépôt: 92402166.0
(22) Date de dépôt: 28.07.1992
(51) Int. Cl.: F16B 21/07

(54) **Dispositif pour l'assemblage et le désassemblage rapide de deux pièces l'une sur l'autre**
Vorrichtung zum schnellen Montieren und Demontieren von zwei aufeinanderliegenden Teilen
Device for the quick assembly and disassembly of two parts one over the other

(30) Priorité: 30.09.1991 FR 9111984
(43) Date de publication de la demande: 07.04.1993
(73) Titulaire: ALLIEDSIGNAL EUROPE SERVICES TECHNIQUES, 93700 Drancy (FR)
(72) Inventeur: Negre, Gilles, F-75015 Paris (FR); Fourcade, Jean, F-93260 Les Lilas (FR)
(74) Mandataire: Bentz, Jean-Paul

(56) Documents cités:
- FR-A- 570 222
- FR-A- 1 210 943
- US-A- 3 896 698

## Description

La présente invention a pour objet un dispositif pour l'assemblage et le désassemblage rapide de deux pièces l'une sur l'autre.

Dans de nombreux domaines de la technologie, il est souvent nécessaire d'assembler deux pièces ensemble de façon sûre, ces deux pièces devant pouvoir être assemblées et désassemblées de façon rapide et sûre un grand nombre de fois. Les moyens connus à vis-écrou, à goupille ou clavette ou à circlip, s'ils peuvent être mis en oeuvre de façon sûre, ne permettant cependant pas une mise en oeuvre rapide.

On connaît du document FR-A-1 210 943, un dispositif de fixation ou d'accrochage à linguets, étudié de manière à verrouiller amoviblement un élément de montage sur un élément d'ancrage, comportant un corps muni d'une bride et présentant des fentes pour la réception de linguets de verrouillage, montés à coulissement et à rotation dans ces fentes, chacun de ces linguets présentant un pivot destiné à coopérer avec cette bride et un crochet pouvant venir attaquer l'élément d'ancrage, de telle sorte que l'élément de montage soit alors verrouillé sur cet élément d'ancrage, une bague de verrouillage coulissante coopérant avec ces linguets pour les faire coulisser et pivoter, afin de les amener en position verrouillée ou déverrouillée, des organes maintenant la bague de verrouillage dans la position désirée de verrouillage ou de déverrouillage des linguets.

Un tel dispositif est relativement complexe.

L'invention a donc pour objet un dispositif d'assemblage et de désassemblage de deux pièces l'une sur l'autre qui soit peu coûteux et fiable, rapide et simple.

Dans ce but, l'invention propose un dispositif pour l'assemblage et le désassemblage d'une première pièce et d'une deuxième pièce, le dispositif comprenant un premier élément solidaire de la première pièce et coopérant avec un deuxième élément maintenant la deuxième pièce sur la première, caractérisé en ce que le premier élément est un téton formé d'une tige et d'une tête et en ce que le deuxième élément est composé d'un manchon dans lequel coulisse un piston.

D'autres buts, caractéristiques et avantages de la présente invention ressortiront de la description qui suit d'un mode de réalisation de l'invention donné à titre d'exemple non limitatif en référence aux dessins annexés sur lesquels :
- la Figure 1 est une vue en coupe partielle d'un dispositif d'assemblage selon la présente invention, représenté en position de repos,
- la Figure 2 est une vue en coupe partielle d'un dispositif d'assemblage selon la présente invention, représenté dans la position qu'il occupe au cours du montage,
- la Figure 3 est une vue en coupe partielle d'un dispositif d'assemblage selon la présente invention, représenté dans sa position montée,
- la Figure 4 est une vue en coupe partielle d'un dispositif d'assemblage selon la présente invention, représenté dans la position qu'il occupe au cours du démontage, et
- la Figure 5 est une vue en coupe partielle d'un dispositif d'assemblage selon la présente invention, représenté dans sa position démontée.

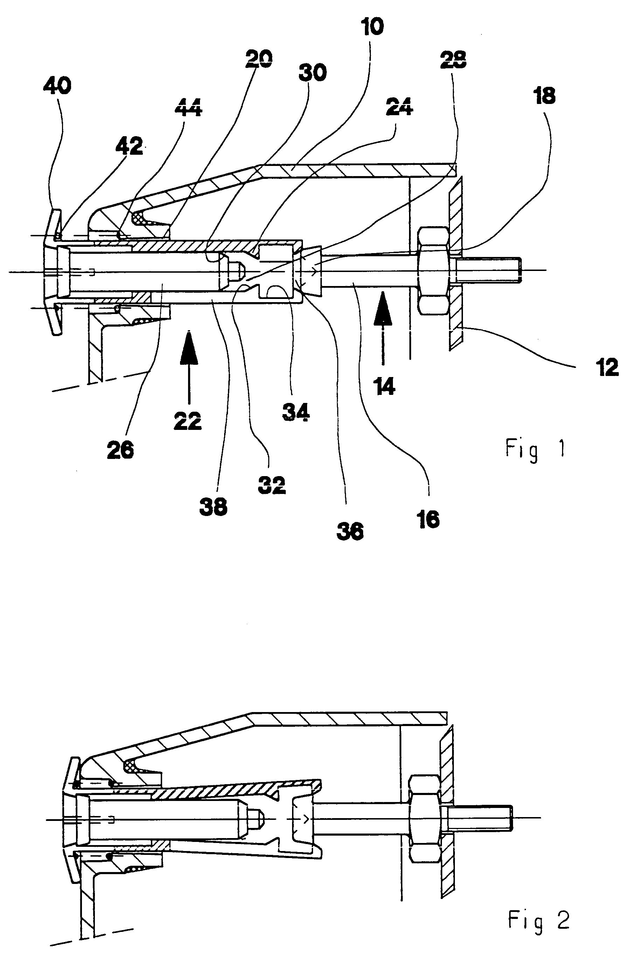

On voit sur la Figure 1 un dispositif d'assemblage selon l'invention, pour le montage de deux pièces l'une sur l'autre, par exemple d'un capot 10 sur un support 12. Au support 12 est solidarisé, par exemple par vissage et blocage, un téton 14, constitué d'une tige 16 et d'une tête 18. La tête 18 a une forme tronconique, dont la petite base est située du côté le plus extrême du téton 14.

Dans le capot 10 est formé une ouverture 20 destinée à venir en face du téton 14 lorsque le capot 10 est en place sur le support 12. Dans l'ouverture 20 est reçu un ensemble mobile 22, constitué d'un manchon 24 dans lequel coulisse un piston 26.

Le manchon 24 d'une forme générale tubulaire, est formé avec un alésage interne 28 dans lequel coulisse le piston 26. L'alésage 28 comporte une portion cylindrique 30 dans la partie médiane du manchon 24, qui se raccorde à une portion tronconique 32 vers l'extrémité du manchon 24 dirigée vers le téton 14, la petite base du tronc de cône étant la plus proche du téton 14. Cette portion tronconique débouche dans une gorge 34 formée dans le manchon 24, de longueur axiale légèrement supérieure à la longueur axiale de la tête 18 du téton 14. Une ouverture 36 est pratiquée à l'extrémité du manchon 24 pour faire déboucher la gorge 34 vers l'extérieur en direction du téton 14. Cette ouverture 36 est avantageusement tronconique, de même angle au sommet que l'angle au sommet de la tête tronconique 18 du téton 14, et dont la grande base est située du côté extérieur et a un diamètre égal à celui de la petite base de la tête tronconique 18 du téton 14.

Enfin, des fentes radiales 38 sont pratiquées axialement dans la paroi du manchon 24 pour favoriser sa déformation élastique radiale, et le manchon est formé, à son extrémité la plus éloignée du téton 14 et destinée à rester en dehors du capot, avec une partie élargie radialement formant une tête 40.

Ayant ainsi décrit le dispositif de fixation selon l'invention, son fonctionnement se comprendra aisément.

On voit sur la Figure 1 le dispositif de l'invention prêt à fonctionner. Le capot 10 ayant été au préalable correctement positionné par rapport au support 12 équipé du téton 14, l'ouverture 20 dans le capot 10 se trouve coaxiale au téton 14. L'ensemble 22, c'est-à-dire le manchon 24 contenant le piston 26 dans la position représentée, est alors introduit dans l'ouverture 20. Un ressort 42 sera avantageusement préalablement disposé autour du manchon 24, de façon à venir porter sur la face de la tête 40 dirigée vers le capot 10 et sur un épaulement 44 formé sur le capot 10 autour de l'ouverture 20. Le rôle de ce ressort sera explicité par la suite.

En poursuivant l'introduction de l'ensemble 22 dans l'ouverture 20, le manchon 24 arrive dans la position représentée sur la Figure 1, dans laquelle la circonférence de l'ouverture 36 vient en contact avec la circonférence de la tête 18 du téton 14. Le pourtour intérieur de l'ouverture 36 et de la tête 18 ayant des formes complémentaires, et grâce aux fentes 38, les bords de l'ouverture 36 vont glisser le long de la tête 18 en s'écartant radialement, pour arriver dans la position représentée sur la Figure 2. Pendant ce mouvement, le ressort 42 a été comprimé.

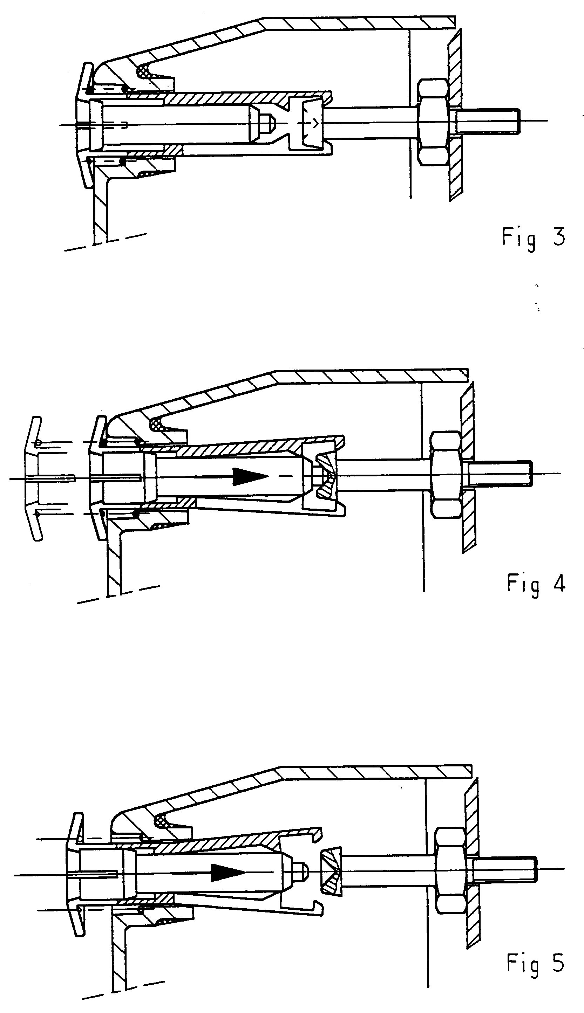

A la fin de ce mouvement d'introduction, la tête 18 est complètement entourée par la gorge 34 et les bords de l'ouverture 36, du fait de l'élasticité du matériau constituant le manchon 24, pouvant se rapprocher pour reprendre leur position de repos, ainsi qu'on l'a représenté à la Figure 3. Le capot 10 se trouve alors assemblé au support 12 d'une façon particulièrement simple, à savoir la seule introduction de l'ensemble 22 dans l'ouverture 20.

Le désassemblage du capot et du support s'effectuent également de façon très simple. Ainsi qu'on l'a représenté sur la Figure 4, il suffit de pousser de l'extérieur sur une des extrémités du piston 26 à l'aide d'un outil approprié, comme par exemple un tournevis, pour qu'il se déplace dans l'alésage 28. L'autre extrémité du piston 26 arrive alors dans la portion tronconique 32 de l'alésage 28 et provoque l'écartement radial des parois du manchon 24, et donc également l'écartement radial des bords de l'ouverture 36.

Celle-ci va donc augmenter de diamètre à mesure de l'enfoncement du piston 26, jusqu'à ce qu'il devienne au moins égal au diamètre de la grande base de la tête 18 du téton 14. De façon concommitante, l'extrêmité du piston 26 vient en butée sur la tête 18 du téton 14, dans laquelle est formée une empreinte conique concave, de même axe que celui du téton 14 et de la tête 18. Cette empreinte conique réalise le centrage du piston 26 par rapport au téton 14, et donc le centrage des bords de l'ouverture 36 dans le manchon 24 par rapport à la tête 18 du téton 14. A ce moment, le mouvement du manchon 24 vers l'extérieur du capot 10 n'est plus empêché par le téton 14, et est au contraire favorisé par le ressort 42 qui se trouvait dans son état comprimé.

Le ressort 42 fait donc sortir le manchon 24 du capot 10, en éloignement du téton 14, comme représenté à la Figure 4. Le ressort 42 a pour objet de faciliter le désengagement du manchon 24 de la tête 18. S'il a été omis lors du montage, volontairement ou non, il faudrait alors exercer une pression sur le piston 26 et une traction sur le manchon 24 pour désassembler les deux pièces.

En relâchant la pression sur le piston 26, la sollicitation du ressort 42 devient prépondérante et l'ensemble 22 adopte la position illustrée à la Figure 5, où la séparation des deux pièces 10 et 12 est alors possible.

Comme on peut le voir également sur la Figure 5, l'invention procure un avantage important. En effet, dans cette position où le manchon 24 est dégagé de la tête 18 sous l'action du piston 26, les parois du manchon 24 présentent une forme évasée. En reculant à travers l'ouverture 20, le manchon 24 va donc venir se coincer dans cette ouverture du capot 10, rendant ainsi l'ensemble 22 imperdable.

Lorsque l'on désire procéder au remontage du capot 10 sur le support 12, on positionne ces deux éléments correctement l'un par rapport à l'autre, et le dispositif de l'invention occupe la position illustrée sur la Figure 5. En exerçant une pression sur la tête 40 du manchon 24, le ressort 42 se comprime au fur et à mesure de l'avance de l'ensemble manchon 24-piston 26.

Cet ensemble va venir en butée, par l'intermédiaire de l'extrêmité du piston 26, sur la tête 18 du téton 14. L'empreinte cônique qui y est formée réalise comme précédemment le centrage du piston 26, et des bords de l'ouverture 36, par rapport à la tête 18 du téton 14. Du fait de la position avancée du piston 26 dans le manchon 24, l'ouverture 36 présente un diamètre supérieur à celui de la tête 18, et l'ensemble manchon 24-piston 26 va venir occuper la position illustrée sur la Figure 4.

Une pression supplémentaire exercée sur la tête 40 du manchon 24, qui est alors en butée sur le capot 10, aura pour résultat une légère flexion de celle-ci pour permettre une avancée supplémentaire du manchon 24. Au cours de ce mouvement supplémentaire, les bords de l'ouverture 36 dépassent la tête 18, et la portion troncônique 32 de l'alésage 28 du manchon 24 glisse le long d'une région de l'extrêmité du piston 26 alors en butée sur le téton 14. En donnant à cette région d'extrêmité du piston 26 une forme convenable, par exemple troncônique ainsi qu'on l'a représenté, les formes troncôniques du manchon 24 et du piston 26 vont coopérer pour provoquer le mouvement de recul du piston 26 dans le manchon 24. Ainsi, les bords de l'ouverture 36 peuvent reprendre leur position de repos en se rapprochant radialement, la tête 18 du téton 14 se retrouvant entourée par la gorge 34, et en prise avec le manchon 24.

On a donc bien décrit selon l'invention un dispositif particulièrement simple et rapide à mettre en oeuvre pour l'assemblage , le désassemblage et le réassemblage ultérieur de deux pièces l'une sur l'autre, de façon efficace et peu onéreuse.

## Revendications

1. Dispositif pour l'assemblage et le désassemblage d'une première pièce (12) et d'une deuxième pièce (10), le dispositif comprenant un premier élément (14) solidaire de la première pièce (12) et coopérant avec un deuxième élément (22) maintenant la deuxième pièce (10) sur la première (12), caractérisé en ce que le premier élément (14) est un téton formé d'une tige (16) et d'une tête (18) et en ce que le deuxième élément (22) est composé d'un manchon (24) dans lequel coulisse un piston (26).

2. Dispositif selon la revendication 1, caractérisé en ce que la tête (18) du téton (14) a une forme tronconique, dont la petite base est située du côté le plus extrême du téton (14).

3. Dispositif selon la revendication 1, caractérisé en ce que le deuxième élément (22) est reçu dans une ouverture (20) destinée à venir en face du téton (14) lorsque la deuxième pièce (10) est en place sur la première pièce (12).

4. Dispositif selon la revendication 3, caractérisé en ce que le deuxième élément (22) est constitué d'un manchon (24) dans lequel coulisse un piston (26).

5. Dispositif selon la revendication 4, caractérisé en ce que le manchon (24) est formé avec un alésage interne (28) qui comporte une portion cylindrique (30) et une portion tronconique (32).

6. Dispositif selon la revendication 5, caractérisé en ce que le manchon (24) comporte une gorge (34) destinée à coopérer avec la tête (18) du téton (14).

7. Dispositif selon la revendication 6, caractérisé en ce que des fentes radiales (38) sont pratiquées axialement dans la paroi du manchon (24).

8. Dispositif selon l'une des revendications 3 à 7, caractérisé en ce que le manchon (24) est formé avec une partie élargie radialement pour former une tête (40).

9. Dispositif selon la revendication 8, caractérisé en ce qu'un ressort (42) est disposé entre la tête (40) du manchon (24) et un épaulement (44) formé sur la deuxième pièce (10) autour du l'ouverture (20).

## Claims

1. Device for the assembly and the disassembly of a first part (12) and of a second part (10), the device comprising a first member (14) securely attached to the first part (12) and co-operating with a second member (22) retaining the second part (10) on the first (12), characterized in that the first member (14) is a stud formed of a shank (16) and of a head (18) and in that the second member (22) is composed of a sleeve (24) in which slides a piston (26).

2. Device according to Claim 1, characterized in that the head (18) of the stud (14) has the shape of a truncated cone, whose small base is located on the outermost side of the stud (14).

3. Device according to Claim 1, characterized in that the second member (22) is received in an aperture (20) designed to come opposite the stud (14) when the second part (10) is in place on the first part (12).

4. Device according to Claim 3, characterized in that the second member (22) is constituted by a sleeve (24) in which slides a piston (26).

5. Device according to Claim 4, characterized in that the sleeve (24) is formed with an internal bore (28) which comprises a cylindrical portion (30) and a portion (32) in the shape of truncated cone.

6. Device according to Claim 5, characterized in that the sleeve (24) comprises a groove (34) designed to co-operate with the head (18) of the stud (14).

7. Device according to Claim 6, characterized in that radial slots (38) are made axially in the wall of the sleeve (24).

8. Device according to any of Claims 3 to 7, characterized in that the sleeve (24) is formed with a radially widened part so as to form a head (40).

9. Device according to Claim 8, characterized in that a spring (42) is disposed between the head (40) of the sleeve (24) and a shoulder (44) formed on the second part (10) around the aperture (20).

## Patentansprüche

1. Vorrichtung für das Zusammenfügen eines ersten Teils (12) und eines zweiten Teils (10) sowie für deren Lösen voneinander, wobei die Vorrichtung ein erstes Element (14) umfaßt, das fest mit dem ersten Teil (12) verbunden ist und mit einem zweiten Element (22) zusammenwirkt, wodurch das zweite Teil (10) an dem ersten (12) gehalten wird, dadurch gekennzeichnet, daß das erste Element (14) ein Ansatz ist, der gebildet ist durch eine Stange (16) und einen Kopf (18), und daß das zweite Element (22) aus einer Hülse (24) besteht, in der ein Kolben (26) gleitet.

2. Vorrichtung nach Anspruch 1, dadurch gekennzeichnet, daß der Kopf (18) des Ansatzes (14) die Form eines Kegelstumpfes aufweist, dessen kleine Grundseite auf der Endseite des Ansatzes (14) angeordnet ist.

3. Vorrichtung nach Anspruch 1, dadurch gekennzeichnet, daß das zweite Element (22) in einer Öffnung (20) aufgenommen ist, die dafür vorgesehen ist, gegenüber dem Ansatz (14) zu gelangen, wenn das zweite Teil (10) an dem ersten Teil (12) angeordnet ist.

4. Vorrichtung nach Anspruch 3, dadurch gekennzeichnet, daß das zweite Element (22) durch eine Hülse (24) gebildet ist, in der ein Kolben (26) gleitet.

5. Vorrichtung nach Anspruch 4, dadurch gekennzeichnet, daß die Hülse mit einer Innenbohrung (28) gebildet ist, welche einen zylindrischen Abschnitt (30) und einen kegelstumpfförmigen Abschnitt (32) umfaßt.

6. Vorrichtung nach Anspruch 5, dadurch gekennzeichnet, daß die Hülse (24) eine Nut (34) umfaßt, die dafür vorgesehen ist, mit dem Kopf (18) des Ansatzes (14) zusammenzuwirken.

7. Vorrichtung nach Anspruch 6, dadurch gekennzeichnet, daß in der Wand der Hülse (24) axial radiale Schlitze (38) ausgebildet sind.

8. Vorrichtung nach einem der Ansprüche 3 bis 7, dadurch gekennzeichnet, daß die Hülse (24) mit einem Abschnitt ausgebildet ist, der radial erweitert ist, um einen Kopf (40) zu bilden.

9. Vorrichtung nach Anspruch 8, dadurch gekennzeichnet, daß zwischen dem Kopf (40) der Hülse (24) und einem an dem zweiten Teil (10) um die Öffnung (20) herum gebildeten Absatz (44) eine Feder (42) angeordnet ist.
